# EUROPEAN PATENT SPECIFICATION

(11) **EP 0 467 989 B1**
(45) Date of publication and mention of the grant of the patent: **03.07.1996**
(21) Application number: 90907768.7
(22) Date of filing: 09.04.1990
(51) Int. Cl.: B01D 53/34

(54) **INCINERATOR FOR COMPLETE OXIDATION OF IMPURITIES IN A GAS STREAM**
VERBRENNUNGSOFEN FÜR KOMPLETTE OXYDIERUNG DER UNREINHEITEN IN EINEM GASSTROM
INCINERATEUR POUR L'OXYDATION COMPLETE D'IMPURETES SE TROUVANT DANS UN COURANT DE GAZ

(30) Priority: 12.04.1989 US 336718; 22.05.1989 US 355987; 28.02.1990 US 486617
(43) Date of publication of application: 29.01.1992
(73) Proprietor: CUSTOM ENGINEERED MATERIALS INCORPORATED, Oceanside, CA 92056 (US)
(72) Inventor: ANDERSON, Lawrence, B., Encinitas, CA 92024 (US); HAMMON, Timothy, Edward, Cardiff, CA 92007 (US); FRIELER, Cliff, Highland Park, CA 90042 (US)
(74) Representative: Sommerville, John Henry
(86) International application number: US9001917
(87) International publication number: WO9012636

(56) References cited:
- EP-A- 0 346 893
- FR-A- 2 584 800
- FR-A- 2 591 509
- US-A- 0 329 087
- US-A- 0 857 808
- US-A- 2 601 041
- US-A- 3 268 296
- US-A- 3 522 016
- US-A- 3 930 802
- US-A- 4 472 133
- US-A- 4 716 725
- US-A- 4 740 154
- US-A- 4 788 004

## Description

### BACKGROUND OF THE INVENTION

The present invention relates to an apparatus and method for completely incinerating oxidizable impurities in a process gas, including a nonflammable gas stream. It is particularly suitable for treatment of waste gases from semiconductor fabrication processes, and other gases containing highly toxic, pyrophoric, or otherwise undesirable impurities.

Semiconductor manufacturing processes utilize a variety of chemicals, many of which have extremely low human tolerance levels. Such materials include gaseous hydrides of antimony, arsenic, boron, germanium, nitrogen, phosphorous, silicon, selenium and other chemical elements. Typically used compounds include arsine, diborane, germane, hydrogen selenide, phosphine, silane, stibine and many others including halogenated derivatives of the above hydrides, hydrogen chloride, tungsten hexafluoride and a wide variety of metal-organic compounds as well. Acceptable exposure levels for certain of these materials are as low as 50 parts per billion in air that may be inhaled. A significant problem has been the removal of these materials from the effluent gas streams of semiconductor manufacturing processes. While virtually all U.S. semiconductor manufacturing facilities utilize scrubbers or other related means for treatment of their effluent gases, that technology is not capable of removing all toxic or otherwise unacceptable impurities.

Although the levels of arsine, phosphine and other similarly toxic materials in typical process gas streams are relatively low, and can be further reduced by scrubbers, these levels are, under various state and federal standards, still above acceptable levels. On the other hand, if it were possible to effect substantially complete oxidation of these impurities, those oxidation products could be reduced to acceptable levels by conventional scrubber technology.

One solution to this problem, then, is to incinerate the process gas to oxidize the toxic materials, converting them to less toxic form. Conventional incinerators, however, typically achieve less than complete combustion. This is particularly so when the impurity to be incinerated is present in relatively low quantities. The problem is compounded when the process stream to be treated is composed primarily of a nonflammable gas such as nitrogen bearing the undesirable impurities. While some of the oxidizable impurities are removed by conventional incinerators, at least a portion of those impurities can escape the combustion zone, thereby creating at least the potential of toxic discharge into the atmosphere.

Another problem with utilization of conventional incinerators is the size of the incinerator and the temperature of the flue gas exiting the incinerator. Many semiconductor fabrication facilities have heretofore used scrubbers as the primary means for removing the impurities in question. In a large number of cases, recent more stringent air pollution regulations have necessitated a reduction in emissions. Even after an incinerator is installed, the scrubber will need to treat the flue gas of the incinerator to remove the oxides of the incinerated impurities. Thus, the incinerator will be installed, in many instances, as a retrofit device. The ducting and other process gas handling equipment in many existing facilities is not designed for high temperature gas, and flue gas from conventional incinerators can melt plastic ducting and/or create fire hazards.

Because retrofit applications are contemplated, the size of the incinerator is also a major concern. Desirably, the incinerator can fit and utilize existing ducting without requiring substantial additional space.

A further limitation of conventional incinerators is their lack of ability to both mix sufficient fuel with a nonflammable process stream in order to render it flammable and then to also achieve complete combustion of this fuel enriched gas. The choice of such fuel gas to be mixed with a nonflammable process gas is also important from the perspective of maintaining low operating costs, and the design must reflect this choice of fuel if proper burning characteristics are to be achieved.

Another problem with existing incinerators is their inability to handle the formation of solid oxides. The oxidation products of certain gaseous impurities in the waste gas from semiconductor and other processes are solids. For example, silanes oxidize to silica (sand). Accumulations of silica in most incinerators represents a substantial maintenance problem when those devices are used in the treatment of silane-containing gas streams.

In addition to converting toxic materials to their less toxic oxides, controlled incineration is desirable when the waste gas stream contains potentially flammable or explosive materials. Some semiconductor process gas streams, for example, contain substantial quantities of hydrogen gas or organic solvents, presenting obvious explosion hazards. Similarly, the presence of pyrophoric gases such as silanes can also present an explosion hazard. (Such pyrophoric materials spontaneously ignite in air.)

An additional hazard potential exists when pipes leading to the incinerator contain premixed combustible mixtures which might be ignited by the incinerator flame and then propagate a flame backwards into the pipe with concomitant explosion potential. When conventional flame arrestors are used to prevent such flashbacks from occurring, they tend to plug up very quickly because of the solid oxide particles which are typically present in such mixtures, particularly those containing silane.

US Patent No. 3268296 and US Patent No. 4716725 disclose devices for oxidising materials in a gas stream which include a combustion chamber having a top and a bottom, a gas outlet, and means for introducing process gas and a source of fuel into the combustion chamber. However, there is no provision for the efficient removal of hydrides and metal organic compounds thereby creating a substantial maintenance problem.

Accordingly, one object of the present invention is to provide an incinerator having increased ability to oxidize virtually all oxidisable components in a waste gas stream.

Another object of the present invention is to provide controlled combustion of flammable or explosive components of a waste gas.

Still another object of the present invention is to provide an incinerator that is compact and can merge easily with existing ductwork.

Another object of the present invention is to provide an incinerator which converts a nonflammable gas stream into a flammable stream through the mixing in of additional fuel gas such that the entire mixture is burned and not merely heated in the incinerator.

A further object is to provide an incinerator which can effectively make use of inexpensive fuel in carrying out the conversion of nonflammable to flammable mixtures.

Yet another object is to provide an incinerator that has an effluent flue gas which is sufficiently cool to be compatible with existing ducting.

Another object is to provide an incinerator with improved capabilities for handling solid particulate combustion products.

An additional object of the present invention is the prevention of flashbacks without the associated plugging which typically occurs with use of conventional flame arrestors.

A further object is to reduce the tendency for all reactions to accelerate within the inlet pipe close to the flame by cooling the inlet section. Of particular interest among these reactions are those whose solid products of reaction tend to deposit in the pipes and clog them, as well as those reactions which accelerate flame speed as temperature is raised. The incinerator of the present invention employs active cooling of the inlet pipe.

Yet another object of the present invention is to increase the flow speed of gases introduced therein, such as nitrogen, which further reduces the likelihood of flashbacks by exceeding the normal flame propagation speed in the inlet section and by tending to dilute incoming combustible mixtures to below their flammability limits. Sufficient additional fuel to render the mixture flammable again is subsequently added downstream.

The incinerator of the present invention is also able to burn oil mists that are generally non-combustible in other units, such as fluorinated oils used in vacuum pumps. Such vacuum pump oil mists tend to interact with silanes, halogens and other related compounds which are present in the pump exhaust. If the oil mists are not burned, these chemical interactions can lead to formation of hazardous solid materials in plant ductwork including cumulative deposition of certain explosive polymers. This problem is eliminated by the incinerator of the present invention, which is capable of burning such oil mists before they create a potential hazard.

Finally, another object of the present invention is to provide a unit with low maintenance requirements.

These and other objectives are fulfilled by the incinerator of the present invention.

### SUMMARY OF THE INVENTION

Thus, in accordance with one aspect of the present invention, there is provided a device for oxidizing materials in a gas stream including combustion chamber having a top and a bottom, a gas outlet, means for introducing process gas and a source of fuel into the combustion chamber, and a gas outlet for exhaust gas from said combustion chamber, characterised by said combustion chamber defining a mixing zone; means for introducing oxygen carrying gas into said combustion chamber in a manner to cause said oxygen carrying gas to swirl about said mixing zone in a first direction; means for introducing said process gas and source of fuel into said combustion chamber in a manner to cause said process gas and fuel to swirl about said mixing zone in a second direction opposite said first direction to achieve turbulent mixing of said gases and fuel in said mixing zone and means for directing the gas fuel mixture outwardly toward the wall of said combustion chamber and downwardly as it is is buring to produce an exhaust gas, said gas outlet being adapted to operate in conjunction with means applying negative pressure thereto so as to draw exhaust gas from said combustion chamber.

Preferably, said mixture directing means has a conical configuration and an apex at the top thereof.

The means for introducing process gas may be located sufficiently below the top of said combustion chamber that solid combustion byproducts do not substantially deposit in said combustion chamber above said means for introducing process gas.

The device may further comprise a mechanical scraper for removing solid products of reaction from the mixture directing means and from the walls of the combustion chamber. An additional mechanical scraper may also be provided for removing solid products of combustion from the process gas/fuel inlet and mixing means.

The scraper(s) may comprise one or more extensible blades which are spring loaded to extend radially outward, and means may be provided for intermittently advancing and retracting said scraper(s) and for simultaneously rotating said scraper(s).

A removable tray may be located beneath said combustion chamber for collecting solid products of combustion.

In accordance with another aspect of the present invention, there is provided a method for oxidizing materials in a gas stream, comprising the step of introducing fuel and process gas into a combustion chamber that defines a mixing zone and has a gas outlet, characterised by the further steps of introducing oxygen-carrying gas into said combustion chamber in a manner so that said oxygen carrying gas swirls about said mixing zone in a first direction; introducing process gas and fuel into said mixing zone in said combustion chamber in a manner so that said process gas and fuel swirls about said mixing zone in a second direction opposite said first direction to achieve turbulent mixing when said swirling gases collide, to thereby form a burning mixture; directing said burning mixture outwardly and downwardly through said combustion chamber and forming an exhaust gas which exits said combustion chamber; and inducing a negative pressure on said gas outlet to draw said exhaust gas out of said combustion chamber.

The method may further comprise the step of preheating the oxygen carrying gas prior to its entry into the mixing chamber with heat from the oxidation of the fuel, and also the step of automatically removing accumulated solid combustion products from walls of the chamber.

The preheating step may comprise passing the oxygen-carrying gas upward over the outside of the combustion chamber. The mixing step may comprise swirling the preheated gas entering the mixing zone in a first direction and swirling the fuel and process gas entering the mixing zone in a second, opposite direction, so that turbulent mixing occurs when the swirling gases collide.

The method may also include the step wherein one of the swirling gases is introduced into the mixing zone radially inwardly of another of the swirling gases, and at a point sufficiently below the top of the combustion chamber that solid products of combustion do not accumulate on the top. The method may further comprise the step of cooling the flue gas by mixing it with cooling air.

For preventing flashback into a conduit supplying process gas into the combustion chamber the cross sectional area of the conduit is reduced and sufficient nonflammable gas is introduced into the conduit upstream of the chamber so that the flow rate of gas in the conduit is greater than the flame propagation speed in the resulting gas mixture.

### BRIEF DESCRIPTION OF THE DRAWINGS

Figure 1 is a perspective view of the incinerator of the present invention
Figure 2 is a cross section of the preferred embodiment.
Figure 3 is a perspective cut-away view of a combustion chamber/preheater assembly.
Figure 4 is an enlarged cross sectional view of an inlet/ nozzle scraper.
Figure 5 is an enlarged cross sectional view of an inlet/nozzle scraper assembly and a chamber scraper assembly, taken in the same manner as the cross section of Figure 2.

### DETAILED DESCRIPTION OF THE INVENTION

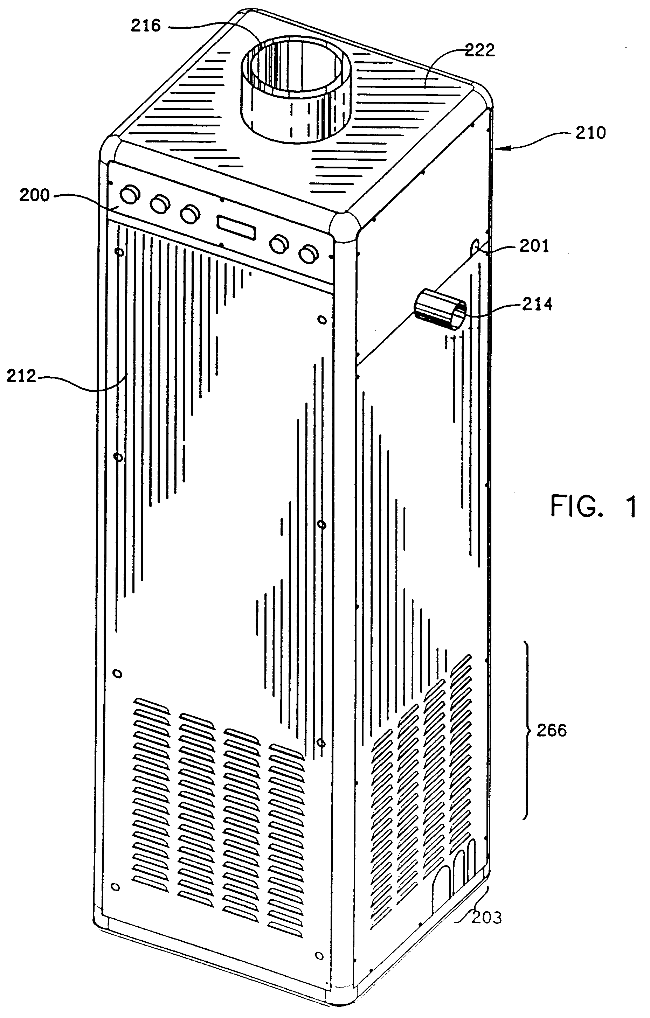

The preferred embodiment of the present invention is illustrated in the Figures. Shown in Figures 1-5 is an updraft system suitable for use in handling lightweight particulate combustion by-products, including those materials that tend to accumulate on burner components.

With reference to Figure 1, the incinerator 210 of the present invention is preferably a vertically oriented device, having a housing 212, a process gas inlet 214, and a flue gas outlet 216. The housing 212 may further contain an aperture 201 through which a pneumatically activated bypass valve (not shown) is connected to a compressed gas line within housing 212, and apertures 203 for the attachment of incoming fuel gas, pressurized gases and electrical lines (not shown) to appropriate structures contained within the housing 212. Control panel 200 may advantageously contain various on/off and reset buttons, status lights and a display window providing operating parameter information, next step instructions and fault diagnostic messages as appropriate. Louvers 266 provide access for cooling air to enter housing 212.

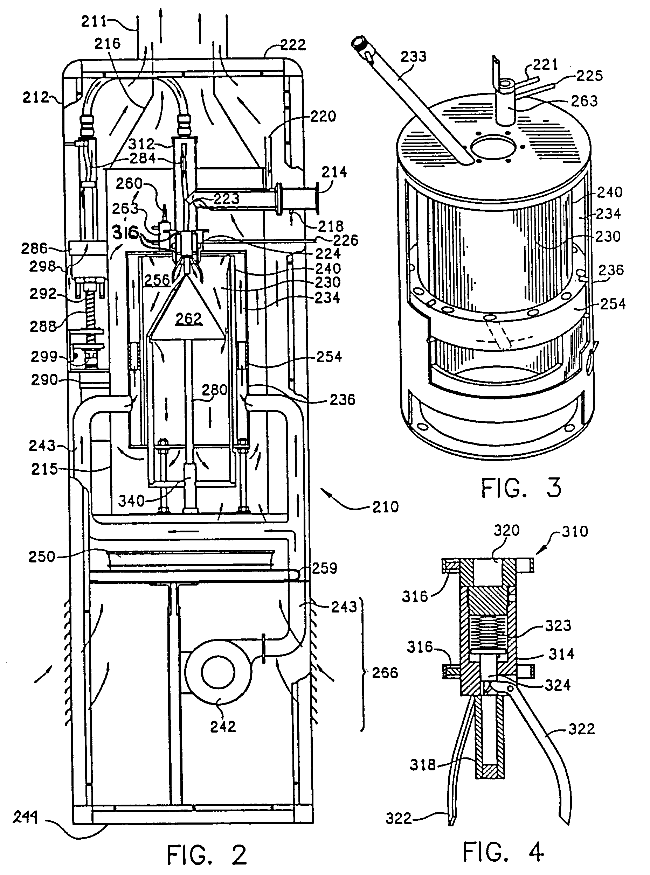

In operation, process gas containing oxidizable impurities is introduced into the incinerator 210 through the process gas inlet 214, where it is combined with fuel gas (such as natural gas) entering the fuel gas inlet 220 (shown in Figure 2) and with combustion air or other oxygen-containing gas, and is oxidized, generating a flue gas. The flue gas exits the housing 212 of the incinerator 210 through the flue gas outlet 216, which is preferably situated at the top 222 of the incinerator 210.

The preferred embodiment illustrated in Figures 2-5 includes a number of features that facilitate operation when treating materials that generate particulate by-products and includes features which remove such particulates from interior surfaces of the incinerator.

With reference to Figure 2, the general design of the incinerator 210 of the preferred embodiment is illustrated. In this design, the incinerator 210 has a housing 212 and a process gas inlet 214 substantially similar to those of Figure 1. Within the housing 212 is contained a combustion chamber 230. Exhaust gases leaving the combustion chamber 230 of this embodiment of the incinerator 210 exit at a flue gas outlet 216.

In most instances, the incinerator 210 is also provided with a pilot light chamber 263. Process gas containing oxidizable impurities is introduced into the incinerator 210 through the process gas inlet 214, where it is combined with fuel gas (such as natural gas) entering the fuel gas inlet 220 and with combustion air or other oxygen-containing gas, and is oxidized, generating a flue gas. The flue gas exits the housing 212 of the incinerator 210 through the flue gas outlet 216 located on top of flue gas plenum 215.

In operation, process gas containing impurities enters the housing 212 through the process gas inlet 214. This inlet 214 preferably carries the process gas radially inward to the central axis of the incinerator 210, which runs vertically through the center of the incinerator 210. The process gas inlet 214 then directs the process gas downwardly along the central axis of the incinerator 210. At this point, fuel gas enters through fuel gas inlet hole(s) 223 and is mixed with the process gas. The path of fuel gas from inlet 220 to inlet hole(s) 223 may be directed by a jacket over the outer surface of the process gas inlet 214 thereby providing convective cooling to the inside wall of process gas inlet 214. Additionally, nitrogen for flashback protection may be introduced into the process gas inlet 214 through inlet 218. A total gas flow above 28.3 x 10³ cm³/minute (1 scfm) in inlet 214 will exceed the flame propagation speed at ordinary temperatures for most combustible mixtures except those containing premixed hydrogen and oxidizer.

The downwardly directed mixture of fuel and process gas is further thoroughly mixed with air as it enters combustion chamber 230. This mixing is preferably accomplished by means of a ring nozzle which is represented in Figure 2 as element 224. A sight tube 233 (shown in Figure 3) for attachment of a UV detector is located at the top of combustion chamber 230 adjacent to ring nozzle 224. The UV detector (not shown) functions as a control system to monitor the presence of flame within the combustion chamber. In one embodiment, the ring nozzle 224 is also connected to a pressurized air line 226 which imparts a swirl to the combined fuel gas and process gas. The ring nozzle 224 is advantageously an annular nozzle surrounding the pathway of the process gas as it leaves the process gas inlet 214 in a downward direction along the vertical axis of the incinerator 210. The ring nozzle 224 may comprise a plurality of sonic jets directing air or other pressurized gas around and into the process gas to effect mixing of the process gas, the fuel gas, and the air from the ring nozzle 224. To the extent that any combustion is occurring at the ring nozzle 224, the high velocity within the sonic air jets (which will also function effectively when subsonic) prevents plugging of the jet orifices. Such plugging might otherwise occur through reaction between the injected oxygen and silane in the process gas to form solid reaction products in the jets. It is preferred that the sonic jets are directed not only in a spiral direction, but also are canted downward. This tends to draw the process gas into the combustion chamber 230, with the sonic jets acting as an ejector pump, preventing back pressure from being exerted on the process gas inlet line 214. The ring nozzle 224 preferably injects air through orifices distributed all the way around the process gas inlet 214.

The mixture of fuel gas and process gas exiting the ring nozzle 224 travels downward into a combustion chamber 230 located vertically below the ring nozzle 224 along the vertical axis of the incinerator 210. There the fuel gas and process gases are combined with combustion air that has been preheated by means of a heat exchanger 234. The heat exchanger 234 in the illustrated embodiment comprises a jacket 236 located radially outwardly from and circumferentially surrounding the outer wall 240 of the combustion chamber 230. The combustion air is preferably directed into the heat exchanger 234 by means of a fan 242, which is preferably located at the bottom 244 of the incinerator 210. The fan 242 pushes outside air up through a bifurcated air pipe 243 into the heat exchanger 234. The combustion air leaves the pipe 243 and travels into the heat exchanger 234, which is preferably annular in cross section. The air then moves upward through a swirl inducing ring 254 in the heat exchanger 234. The swirling air then reverses its upward component of direction 180 degrees as it enters the top of the combustion chamber 230. Turbulent mixing of the preheated combustion air and the fuel gas and process gas occurs in a mixing zone 256 in the top of the combustion chamber 230. The hot combustion air entering the mixing zone is swirling in the opposite direction of the fuel/process gas stream stirred by the sonic mixing jets, and the relative angular momentums of the swirling streams are such that little or no swirling is present in the downwardly-traveling gas mixture within and exiting the combustion zone. Particulate matter exiting the bottom of the combustion chamber 230 is normally entrained in the upwardly moving cooling air flow within flue gas plenum 215. Any dense material falling out of the air flow is collected in a catch tray 250 located beneath the combustion chamber and supported atop base support 259. The various support mechanisms beneath the combustion chamber 230 are of an open construction to allow cooling air to pass upwardly past them and past catch tray 230 into flue gas plenum 215.

During startup of the incinerator, and as otherwise needed, an igniter 260 (which can be a conventional spark plug) is used to ignite an air/fuel gas mixture created within pilot chamber 263 to produce a continuous pilot flame extending from pilot chamber 263 into the combustion chamber 230. (Pilot air inlet 221 and pilot fuel gas inlet 225 are shown in Figure 3). The pilot flame assures ignition of the process gas/fuel/air mixture present within the combustion chamber and is located on the blind side of the optical path provided by sight tube 233 for the UV detector. This insures that the UV detector will see no flame should the main combustion flame extinguish but the pilot flame continue to burn.

Located just below the mixing zone 256 in the top of the combustion chamber 230 is a flow director 262 supported by a fixed rod 280. The flow director 262 urges the downwardly-moving burning gas leaving the precombustion zone 256 in a radially outward direction. The flow director 262 may advantageously be conical in configuration, as illustrated in Figure 2, with its apex located in mixing zone 256 and situated symmetrically about the vertical axis of the incinerator 210.

The flue gas generated by the combustion process exits down and out of the combustion chamber 230. The flue gas then reverses direction 180 degrees as it is entrained in and mixes turbulently with a large volume of cooling air drawn upwardly through flue gas plenum 215. In one preferred embodiment, the incinerator is adapted to operate with negative pressure applied to the flue gas outlet. This negative pressure, for example, is applied to the ductwork into which the flue gas travels as it leaves the incinerator 210 by a conventional scrubber or other device. Such negative pressure may be used to further cool the flue gas by drawing outside cooling air into the incinerator through louvers 266 on the housing 212 of the incinerator 210. These louvers 266 are preferably located below the combustion chamber 230. Convective cooling of the housing 212 is assured by the provision for a gap between collar 211 (attached to the external ducting) and the smaller concentric cylindrical portion of flue gas outlet 216, in that some of the cooling air also flows through this gap and must reach it from below by moving upwardly through the space between the inside surfaces of housing 212 and the outer surface of flue gas plenum 215. As a result, the outer housing 212 of the incinerator 210 remains cool. In addition, the continuous flow of air through this gap prevents any accumulation of undesirable gas inside the upper portions of housing 212 should any internal leaks occur.

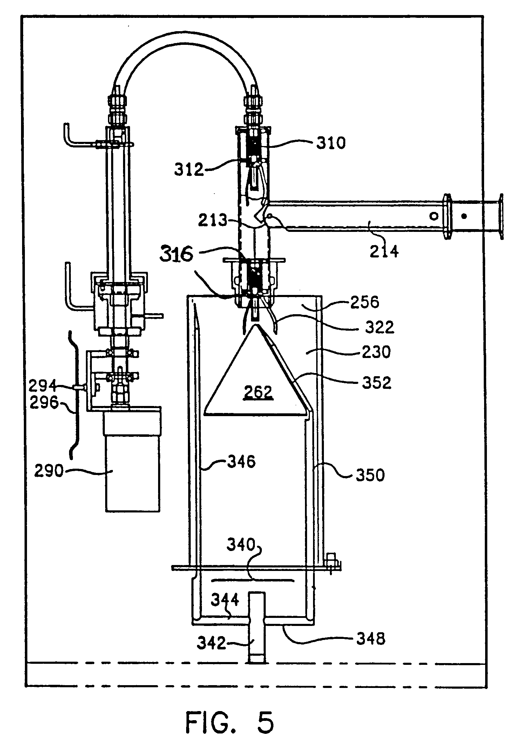

Another aspect of the preferred embodiment of the incinerator 210 that is particularly significant is the provision of scrapers for removal of particulates from interior surfaces of the incinerator. As illustrated in Figures 2,4,5, there is a first scraper 310, an inlet/nozzle scraper, located within tube 312. This inlet/nozzle scraper 310, as shown in Fig. 4, comprises a body 314, two centering rings 316 located annularly over the body 314 for maintaining it centered within the tube 312, a lower post 318 extending downwardly from the body 314, and a cap 320 threaded into the top of the body 314 and compressing a spring 323 inside of the body 314, which in turn biases a piston 324 downwardly. The piston 324 extends through the center of the body 314 to the bottom thereof. Scraper 310 further comprises one or more extensible scraper blades 322 extending vertically downward and radially outward from the body 314, which are spring loaded to extend radially outward against the inside of the tube 312 by means of compressed spring 323 and piston 324. In the illustrated embodiment, multiple blades 322 are shown, albeit it is to be understood that the number of blades may vary without altering the spirit and scope of the invention. Post 318 is provided to dislodge accumulated particulate material at the top of the flow director 262. At cap 320, scraper 310 is attached to a lead screw/flexible drive device used for rotating, raising and lowering the inlet/nozzle scraper 310 up and down within tube 312, as shown in Figures 2 and 5. Figure 5 shows the two typical extreme positions of movable inlet/nozzle scraper 310.

The rotating, raising and lowering of inlet/nozzle scraper 310 is accomplished as follows: a flexible drive cable 284 is attached to scraper 310 at one end and to a lead screw drive mechanism 299 at the other end. A fixed body 286 houses a nut through which the lead screw 288 turns when rotated by a reversing drive motor 290. As the lead screw 288 advances through fixed nut 292 it simultaneously rotates and advances flexible drive cable 284 which is attached firmly to the end of the lead screw 288. Attached firmly to the other end of drive cable 284 is the scraper 310 which then rotates and advances with the drive cable. Drive motor 290 is mounted on the lower end of the lead screw and advances with it. Additionally, a small flow of inert or non reactive gas such as nitrogen is introduced into the fixed body 286 through inlet 298 in order to purge the drive cable conduit and keep it free of reactive or corrosive process gases. This purge gas enters tube 312 at the top and flows past the parked inlet/nozzle scraper 310 thereby cooling it, keeping its guide rings 316 open and preventing process gas from entering the portion of tube 312 above the plane of the process gas inlet 214. This upper portion of tube 312 in which the scraper resides most of the time is unavoidably heated by radiation from the hot combustion chamber.

Figure 5 indicates how the drive motor housing and mounting are constrained from rotating by guide rods 294 which slide along a vertical guide bar 296 as the motor advances up or down with the rotating lead screw. Reversal of rotation and of advancement direction takes place when electrical limit switches are tripped at the ends of the travel and the motor 290 is reversed.

As rotating inlet/nozzle scraper 310 advances downward through tube 312 and past the mouth 213 of the process gas inlet tube 214 it dislodges deposited solids from the inner wall of the tube, thereby preventing gradual buildup of solids and eventual plugging of inlet mouth 213, tube 312 or ring nozzle 224. As the inlet/nozzle scraper 310 continues to move down, extensible blades 322 are biased in such a manner that, when they are extended beyond the ring nozzle 224, they are able to open up radially outwardly and scrape particulate material lying very near to the sonic mixing jets (not shown) of the ring nozzle 224. This is necessary to preserve good mixing in mixing zone 256 where any physical interference between the incoming process gas/fuel mixture and the mixing jets can significantly degrade performance. When inlet/nozzle scraper 310 is withdrawn back into tube 312, blades 322, due to their biasing, may easily be drawn back into ring nozzle 224 and tube 312. An inlet/nozzle scraping cycle is completed when the scraper returns to its parking position at the top of the tube 312 where it resides above the inlet gas flow. One cycle, from top to nozzle and back again, takes about forty seconds to complete. The cycle may be repeated as often as desired, typically once every half hour.

A second, or chamber, scraper 340 is positioned within combustion chamber 230 and, as shown in Figures 2 and 5, comprises a center support bearing 342 located on the central axis of the combustion chamber 230 below the bottom of said chamber; a long radially extending support spoke 344 connected to the bearing 342 which supports a long upright scraper blade 346 extending vertically into the combustion chamber 230 against the inside wall thereof, preferably extending from bottom to top; a short radially extending support spoke 348 connected to the bearing 342 which supports the bottom end of a short upright bar 350, which is further connected at its top end at an angle of about 60° to a scraper blade 352 extending vertically along the outside of the conical flow director 262. Center support bearing 342 is rotatably attached at its lower end to a chain drive mechanism (not shown), distal to the central pivotal axis. Bearing 342 is fitted with a sprocket connected by a drive chain to a sprocket on a motor located below motor 290. This chamber scraper motor runs continuously and turns chamber scraper 340 slowly at several revolutions per minute.

During the operation of the incinerator of the preferred embodiment, the inlet/nozzle scraper 310 and the chamber scraper 340 function to remove particulate materials from within the combustion chamber 230. As noted previously, the inlet/nozzle scraper 310 removes particulates from within the tube 312, from the jets of the ring nozzle 224, and from the apex of the flow director 262. Additionally, scraper blades 346 and 352 rotate continuously. Scraper blade 346 removes particulates from the interior cylindrical wall of the combustion chamber 230, while scraper blade 352 removes particulates from the conical surface of the flow director 262. As particulates are dislodged, they drift out the bottom of chamber 230 and are either entrained into the upwardly moving cooling air within plenum 215 or else fall out of the flow and into catch tray 250. As illustrated in the Figures, in the preferred embodiment, the chamber scraper support and drive apparatus, i.e., the spokes, chain, bearing and motor, are located below the combustion chamber and flow reversal plane as characterized by the arrows indicating direction of gas flow, in order to avoid excessive heating or fouling with particulates, and to minimize intrusion into the combustion chamber of mechanical surfaces which can provide a foothold for particulate deposition leading to eventual blockage of the chamber exit.

During the operation of a typical incinerator 210 having a 5.08 cm [2 inch] process gas inlet 214 and a combustion chamber volume of 0.0094 m³ [1/3 cubic foot], process gases comprising 0 - 84.95 x 10³ cm³/minute [0-3 scfm] N₂ with 0 - 28.3 x 10³ cm³/minute [[0-1 scfm] H₂ or O₂ and smaller amounts of oxidizable impurities such as arsine, silane, phosphine, diborane and halogenized hydrocarbons are combined with sufficient natural gas or other gaseous fuels to sustain combustion (typically from 0 - 70.8 x 10³ cm³/minute [0-2.5 scfm]). Compressed air is introduced into the swirl nozzle 224 at a rate of 14.16 x 10³ - 84.95 x 10³ cm³/minute, 552 kPa [0.5 to 3 scfm, 80 psig]. The preheated air from the fan 242 enters the combustion zone at a rate of about 283 x 10³ - 1133 x 10³ cm³/minute [10-40 scfm], at a preheated temperature of about 400 degrees C. The negative pressure applied to the flue gas outlet draws air and gas out of the incinerator at a rate of about 11.33 x 10⁶ - 16.99 x 10⁶ cm³/minute [400-600 scfm].

The incinerator 210 houses a control system with electronic controls, plumbing, automatic valves, various sensors, power supplies and other appurtenances (not shown) generally located in the space below catch tray 250 and mounted to vertical panels in the manner illustrated by the mounting of fan 242. The controls are operated from control panel 200. The general nature and functions of the control system will be described briefly.

A microprocessor (such as an Intel 8051, Intel Corp., Santa Clara, CA) works in conjunction with a UV detector/controller (e.g., an Allen Bradley Fireye®, Waltham, Mass.) to operate a number of normally closed solenoid valves, sensors, switches and the like, and to provide status information to the operator. Input gas pressures, operating temperatures, fan pressure, duct draw and natural gas back pressure are sensed and input to the microprocessor. Resident firmware performs a self test and turns on the UV detector/controller if all is well. If the UV detector/controller loses power or fails for any reason the spring loaded fuel gas valve closes, the combustion air fan stops, there is no spark, combustion ceases and the incinerator shuts down. The UV detector/controller has direct control of the essential safety functions (fuel, air, ignition). If the UV detector/controller shuts the system down it cannot be restarted by the microprocessor until the UV controller has been reset manually. The microprocessor prompts the operator that the manual reset is needed and tells when pressing the reset button is likely to be successful. Alternatively, if any of the inputs to the microprocessor indicate a fault, the firmware can instruct the UV detector/controller to shut the system down and the microprocessor can simultaneously take action to notify the operator about the nature of the specific problem and what to do next. For example, if an internal blockage were to restrict the entrance of natural gas into the combustor, the back pressure would begin to rise. Long before the back pressure approaches the line pressure, the back pressure switch will trip and the natural gas valve will close, thereby protecting the gas line from possible back streaming. The microprocessor will sound an audible alarm and place the message "fuel pressure low" in the display window along with instructions about the next action to be taken. Simultaneously the UV detector will sense a flame out condition and its controller will shut the incinerator down. If chamber or exhaust temperatures exceed preset limits during operation, the microprocessor will instruct the UV controller to shut the system down. If any compressed gas pressure falls below its preset limit the microprocessor will close the valve for that gas and similarly call for system shut down. In all such cases the operator is provided with an interlock signal which can be used to automatically shut down his process or, alternatively, the control system will switch a compressed gas solenoid to actuate a pneumatic valve in order to divert the process gas into another operating unit (valve normally diverted). In the event of a scraper failure the microprocessor sounds the alarm and indicates which scraper is out but does not divert the flow or shut down the process, since there is little immediate danger and there is a high probability that the batch can be completed successfully before plugging of the incinerator becomes severe.

## Claims

1. A device for oxidizing materials in a gas stream, said device including a combustion chamber (230) having a top and a bottom, means for introducing process gas (214) and a source of fuel (220) into the combustion chamber, and a gas outlet (216) for exhaust gas from said combustion chamber, characterised by:
said combustion chamber (230) defining a mixing zone (256);
means (242, 254) for introducing oxygen carrying gas into said combustion chamber (230) in a manner to cause said oxygen carrying gas to swirl about said mixing zone (256) in a first direction;
means (224, 226) for introducing said process gas and source of fuel into said combustion chamber in a manner to cause said process gas and fuel to swirl about said mixing zone in a second direction opposite said first direction to achieve turbulent mixing of said gases and fuel in said mixing zone and
means (262) for directing the gas fuel mixture outwardly toward the wall (240) of said combustion chamber (230) and downwardly as it is burning to produce an exhaust gas,
said gas outlet (216) being adapted to operate in conjunction with means applying negative pressure thereto so as to draw exhaust gas from said combustion chamber.

2. A device according to Claim 1, characterised in that the mixture directing means (262) has a conical configuration and has an apex at the top thereof.

3. A device according to Claim 1, or Claim 2, characterised in that said means for introducing process gas and fuel (224, 226) is located sufficiently below the top of said combustion chamber (230) that solid combustion byproducts do not substantially deposit in said combustion chamber above this means.

4. A device according to Claim 1, 2 or 3, characterised in that said means (224, 226) for introducing said process gas and fuel in a swirling manner comprises one or more sonic jets.

5. A device according to Claim 4, characterised in that the or each sonic jet is provided on a ring nozzle (224) connected via a line (226) to a source of air under pressure.

6. A device according to any one of Claims 1 to 5, characterised in that said means for introducing oxygen carrying gas in a swirling manner comprises a fan (242) which feeds said gas upwardly around the outside of the combustion chamber (230) via a pipe (243) containing swirl rings (254) to an inlet at the top of said combustion chamber.

7. A device according to any preceeding Claim, characterised in that a mechanical scraper (310) is provided for removing solid products of combustion from the mixture directing means (262) and from the wall (240) of said combustion chamber (230).

8. A device according to any preceeding Claim, characterised in that a mechanical scraper (310) is provided for removing solid products of reaction from the process gas/fuel inlet (214).

9. A device according to Claim 7, or 8, characterised in that said scraper (310) comprises one or more extensible blades (322) which are spring loaded to extend radially outward.

10. A device according to Claim 7, 8 or 9, characterised in that means (299) are provided for intermittently advancing and retracting said scraper (310).

11. A device according to Claim 10, characterised in that means (284) are provided for simultaneously rotating said scraper (310).

12. A device according to any preceeding Claim, characterised in that a removable tray (250) is located beneath said combustion chamber (230) for collecting solid products of combustion.

13. A method for oxidizing materials in a gas stream comprising the step of introducing fuel and process gas into a combustion chamber (230) that defines a mixing zone (256) and has a gas outlet (216), characterised by the further steps of:
introducing oxygen-carrying gas into said combustion chamber in a manner so that said oxygen carrying gas swirls about said mixing zone (256) in a first direction;
introducing process gas and fuel into said mixing zone (256) in said combustion chamber in a manner so that said process gas and fuel swirls about said mixing zone (256) in a second direction opposite said first direction to achieve turbulent mixing when said swirling gases collide, to thereby form a burning mixture;
directing said burning mixture outwardly and downwardly through said combustion chamber (230) and forming an exhaust gas which exits said combustion chamber; and
inducing a negative pressure on said gas outlet (216) to draw said exhaust gas out of said combustion chamber.

14. A method according to Claim 13, characterised by preheating said oxygen carrying gas prior to its entry into said combustion chamber (230) with heat from said oxidation of said fuel.

15. A method according to Claim 14, characterised in that said preheating step comprises passing said oxygen-carrying gas upward over the outside of said combustion chamber (230).

16. A method according to any one of Claims 13 to 15, characterised in that one of said swirling gases is introduced into said combustion chamber (230) radially inwardly of another of said swirling gases, and at a point sufficiently below the top of said combustion chamber (230) that solid products of combustion do not accumulate on said top.

17. A method according to any one of Claims 13 to 16, characterised by the step of cooling said exhaust gas by mixing it with cooling air.

18. A method according to any one of Claims 13 to 17, characterised by the step of preventing flashback into a conduit supplying process gas into the combustion chamber (230) by reducing the cross-sectional area of the conduit and by introducing sufficient nonflammable gas into said conduit upstream of said chamber (230) that the flow rate of gas in said conduit is greater than the flame propagation speed in the resulting gas mixture.

19. A method according to any one of Claims 13 to 18, characterised by the step of mechanically scraping accumulated solid combustion products from the wall (240) of said combustion chamber (230).

## Patentansprüche

1. Vorrichtung zum Oxidieren von Stoffen in einem Gasstrom, mit einer eine Oberseite und einen Boden aufweisenden Verbrennungskammer (230), einer Einrichtung zum Einführen von Prozeßgas (214) und einer Brennstoffzufuhr (220) in die Verbrennungskammer und einem Gasauslaß (216) für das Abgas aus der Verbrennungskammer, gekennzeichnet durch:
die Bildung einer Mischzone (256) durch die Verbrennungskammer (230);
eine Einrichtung (242, 254) zum Einführen eines sauerstoffhaltigen Gases in die Verbrennungskammer (230) in einer Weise, daß das sauerstoffhaltige Gas in einer ersten Richtung um die Mischzone (256) wirbelt;
eine Einrichtung (224, 226) zum Einführen des Prozeßgases und der Brennstoffzufuhr in die Verbrennungskammer in der Weise, daß das Prozeßgas und der Brennstoff in einer zweiten, der ersten Richtung entgegengesetzten Richtung um die Mischzone wirbeln, um eine turbulente Vermischung der Gase und des Brennstoffes in der Mischzone zu bewirken; und
eine Einrichtung (262) zum Richten der Gas-Brennstoff-Mischung nach außen gegen die Wand (240) der Verbrennungskammer (230) und abwärts, während es zur Bildung eines Abgases brennt,
wobei der Gasauslaß (216) dazu ausgebildet ist, mit einer Einrichtung zum Aufbringen eines negativen Druckes auf ihn zusammenzuwirken, um das Abgas aus der Verbrennungskammer abzuziehen.

2. Vorrichtung nach Anspruch 1, dadurch gekennzeichnet, daß die Einrichtung (262) zum Ausrichten der Mischung eine konische Form und einen Scheitelpunkt an der Spitze aufweist.

3. Vorrichtung nach Anspruch 1 oder 2, dadurch gekennzeichnet, daß die Einrichtungen (224, 226) zum Einführen des Prozeßgases und des Brennstoffes ausreichend weit unter der Oberseite der Verbrennungskammer (230) angeordnet sind, daß feste Verbrennungsnebenprodukte sich im wesentlichen nicht oberhalb dieser Einrichtungen in der Verbrennungskammer ablagern können.

4. Vorrichtung nach Anspruch 1, 2 oder 3, dadurch gekennzeichnet, daß die Einrichtungen (224, 226) zum verwirbelnden Einführen des Prozeßgases und des Brennstoffes eine oder mehrere Überschalldüsen bzw. -strahlen aufweisen.

5. Vorrichtung nach Anspruch 4, dadurch gekennzeichnet, daß die bzw. jede Überschalldüse eine Ringdüse aufweist, die über eine Leitung (226) mit einer Druckluftquelle verbunden ist.

6. Vorrichtung nach einem der Ansprüche 1 bis 5, dadurch gekennzeichnet, daß die Einrichtung zum wirbelnden Einführen des sauerstoffhaltigen Gases einen Lüfter (242) aufweist, der das Gas durch eine Leitung (243) mit Verwirbelungsringen (254) aufwärts um die Außenseite der Verbrennungskammer (230) herum zu einem Einlaß an der Oberseite der Verbrennungskammer fördert.

7. Vorrichtung nach einem der vorherigen Ansprüche, dadurch gekennzeichnet, daß ein mechanischer Schaber (310) vorgesehen ist, um feste Verbrennungsprodukte aus der Einrichtung (262) zum Richten der Mischung und von der Wand (240) der Verbrennungskammer (230) zu entfernen.

8. Vorrichtung nach einem der vorherigen Ansprüche, dadurch gekennzeichnet, daß ein mechanischer Schaber (310) zum Entfernen der festen Reaktionsprodukte von dem Prozeßgas/Brennstoff-Einlaß (214) vorgesehen ist.

9. Vorrichtung nach Anspruch 7 oder 8, dadurch gekennzeichnet, daß der Schaber (310) eine oder mehrere ausfahrbare Klingen (322) aufweist, die sich unter Federbelastung radial nach außen erstrecken.

10. Vorrichtung nach Anspruch 7, 8 oder 9, dadurch gekennzeichnet, daß eine Einrichtung (299) vorgesehen ist, um den Schaber (310) intermittierend vor- und zurückzubewegen.

11. Vorrichtung nach Anspruch 10, dadurch gekennzeichnet, daß eine Einrichtung (284) vorgesehen ist, um gleichzeitig den Schaber (310) zu drehen.

12. Vorrichtung nach einem der vorherigen Ansprüche, dadurch gekennzeichnet, daß eine entfernbare Rinne (310) unter der Verbrennungskammer (230) vorgesehen ist, um die festen Verbrennungsprodukte zu sammeln.

13. Verfahren zum Oxidieren von Stoffen in einem Gasstrom mit dem Schritt des Einführens von Brennstoff und Prozeßgas in eine Verbrennungskammer (230), die eine Mischzone (256) definiert und einen Gasauslaß (216) aufweist, gekennzeichnet durch die folgenden weiteren Schritte:
Einführen von sauerstoffhaltigem Gas in die Verbrennungskammer in der Weise, daß das sauerstoffhaltige Gas in einer ersten Richtung um die Mischzone (256) wirbelt;
Einführen von Prozeßgas und Brennstoff in die Mischzone (256) in der Verbrennungskammer in der Weise, daß das Prozeßgas und der Brennstoff in einer zweiten, der ersten Richtung entgegengesetzten Richtung um die Mischzone (256) wirbeln, um eine turbulente Vermischung zu erzielen, wenn die wirbelnden Gase aufeinandertreffen und um dabei eine brennende Mischung zu bilden;
Richten der brennenden Mischung nach außen und unten durch die Verbrennungskammer (230) und Erzeugen eines Abgases, welches aus der Verbrennungskammer austritt; und
Anlegen eines negativen Druckes an den Gasauslaß (216), um das Abgas aus der Verbrennungskammer abzuziehen.

14. Verfahren nach Anspruch 13, gekennzeichnet durch eine Vorerwärmung des sauerstoffhaltigen Gases vor seinem Eintritt in die Mischkammer (230) mit der Wärme aus der Oxidation des Brennstoffes.

15. Verfahren nach Anspruch 14, dadurch gekennzeichnet, daß der Schritt des Vorwärmens ein Leiten des sauerstoffhaltigen Gases nach oben über die Außenseite der Verbrennungskammer (230) einschließt.

16. Verfahren nach einem der Ansprüche 13 bis 15, dadurch gekennzeichnet, daß eines der wirbelnden Gase radial innerhalb des anderen wirbelnden Gases in die Verbrennungskammer (230) eingeleitet wird, und an einer Stelle ausreichend unterhalb der Oberseite der Verbrennungskammer (230), daß die festen Verbrennungsprodukte sich nicht an der Oberseite ansammeln.

17. Verfahren nach einem der Ansprüche 13 bis 16, gekennzeichnet durch den Schritt des Kühlens des Abgases durch Mischen mit Kühlluft.

18. Verfahren nach einem der Ansprüche 13 bis 17, gekennzeichnet durch den Schritt des Verhinderns eines Flammrückschlages in eine das Prozeßgas in die Verbrennungskammer (230) einführende Leitung durch Verringerung des Querschnittes der Leitung und durch Einführung einer ausreichenden Menge nicht brennbaren Gases in die Leitung vor der Kammer (230), so daß die Strömungsgeschwindigkeit des Gases in der Leitung größer ist als die Ausbreitungsgeschwindigkeit der Flamme in der gebildeten Gasmischung.

19. Verfahren nach einem der Ansprüche 13 bis 18, gekennzeichnet durch den Schritt, mechanisch die angesammelten festen Verbrennungsprodukte von der Wand (240) der Verbrennungskammer (230) abzuschaben.

## Revendications

1. Dispositif pour l'oxydation de matériaux contenus dans un courant gazeux, ce dispositif comportant une chambre de combustion (230) ayant une fermeture supérieure et un fond, des moyens pour introduire un gaz de photogravure (214) et une source de carburant (220) dans la chambre de combustion et un embout d'évacuation (216) pour les gaz d'échappement de la chambre de combustion, caractérisé en ce que :
ladite chambre de combustion (230) définit une zone de mélange (256);
des moyens (242, 254) pour introduire du gaz contenant de l'oxygène dans la chambre de combustion (230) de manière à faire tourbillonner ledit gaz contenant de l'oxygène autour de ladite zone de mélange (256) dans une première direction;
des moyens (224, 226) pour introduire le gaz de photogravure et la source de combustible dans la chambre de combustion de manière à faire tourbillonner le gaz de photogravure et le combustible autour de ladite zone de mélange dans une deuxième direction opposée à ladite première direction, pour compléter le mélange turbulent desdits gaz et combustible dans ladite zone de mélange, et
des moyens (262) pour diriger le mélange gaz-combustible vers l'extérieur en direction de la paroi (240) de la chambre de combustion (230) et vers le bas lorsqu'il est brûlé pour produire un gaz d'échappement,
ledit embout d'évacuation (216) de gaz étant agencé pour coopérer avec des moyens pour appliquer une pression négative à l'ensemble pour soutirer les gaz d'échappement hors de ladite chambre de combustion.

2. Dispositif selon la revendication 1, caractérisé en ce que lesdits moyens (262) pour diriger le mélange ont une configuration conique dont le sommet se trouve au haut de ces moyens.

3. Dispositif selon la revendication 1 ou 2, caractérisé en ce que les moyens pour introduire le gaz de photogravure et le combustible (224, 226) sont localisés suffisamment au bas de la fermeture supérieure de la chambre de combustion (230) de telle manière que les résidus solides de combustion ne se déposent pas dans la chambre de combustion en dessous de ces moyens.

4. Dispositif selon les revendications 1, 2 ou 3, caractérisé en ce que lesdits moyens (224, 226) pour introduire lesdits gaz de photogravure et le combustible de manière turbulente comportent un ou plusieurs jets sonores.

5. Dispositif selon la revendication 4, caractérisé en ce que chacun des jets sonores est produit par une buse annulaire (224) connectée par un conduit (226) à une source d'air sous pression.

6. Dispositif selon l'une quelconque des revendications 1 à 5, caractérisé en ce que lesdits moyens pour introduire un gaz contenant de l'oxygène de manière turbulente, comporte un ventilateur (242) qui alimente à l'aide ce gaz la partie supérieure entourant la chambre de combustion (230), à travers un conduit (243) contenant des bacs de turbulence (254) et en direction d'une entrée ménagée au fond de ladite chambre de combustion.

7. Dispositif selon l'une quelconque des revendications précédentes caractérisé en ce qu'il comporte un racleur mécanique (310) agencé pour éloigner les résidus de combustion solides des moyens pour diriger le mélange (262) et de la paroi (240) de ladite chambre de combustion (230).

8. Dispositif selon l'une quelconque des revendications précédentes caractérisé en ce qu'il comporte un racleur mécanique (310) pour éloigner les résidus solides provenant de la réaction entre les gaz de photogravure et l'entrée de carburant (214).

9. Dispositif selon la revendication 7 ou 8, caractérisé en ce que ledit racleur (310) comporte une ou plusieurs lames extensibles (322) qui sont sollicitées par un ressort en vue d'une extension radiale.

10. Dispositif selon les revendications 7, 8 ou 9, caractérisé en ce que lesdits moyens (299) sont agencés pour avancer et rétracter ledit racleur (310) de façon intermittente.

11. Dispositif selon la revendication 10, caractérisé en ce que lesdits moyens (284) sont agencés pour entraîner simultanément ledit racleur (310) en rotation.

12. Dispositif selon l'une quelconque des revendications précédentes caractérisé en ce qu'il comporte une cuvette amovible (250) qui est disposée sous la chambre de combustion (230) pour collecter les résidus de combustion solides.

13. Procédé pour l'oxydation de matériaux contenus dans un courant gazeux, comportant une étape d'introduction de carburant et de gaz de photogravure dans une chambre de combustion (230) qui définit une zone de mélange (256) et qui comporte un embout d'évacuation des gaz (216), caractérisé par les étapes complémentaires suivantes :
introduction d'un gaz contenant de l'oxygène dans ladite chambre de combustion de manière à faire tourbillonner ledit gaz contenant de l'oxygène autour de ladite zone de mélange (256) dans une première direction;
introduction du gaz de photogravure et de combustible dans la zone de mélange (256) dans la chambre de combustion de manière à faire tourbillonner le gaz de photogravure et le combustible autour de ladite zone de mélange (256) dans une deuxième direction opposée à ladite première direction, pour compléter le mélange turbulent desdits gaz et combustible dans ladite zone de mélange;
diriger ledit mélange combustible vers l'extérieur et vers le bas de la chambre de combustion (230) et former un gaz d'échappement qui s'échappe de ladite chambre de combustion; et
induire une pression négative sur ledit embout d' évacuation (216) pour soutirer des gaz d'échappement hors de la chambre de combustion.

14. Procédé selon la revendication 13, caractérisé en ce que l'on préchauffe ledit gaz contenant de l'oxygène avant son entrée dans la chambre de combustion (230) au moyen de chaleur provenant de l'oxydation dudit combustible.

15. Procédé selon la revendication 14, caractérisé en ce que l'étape de préchauffage comporte le passage dudit gaz contenant de l'oxygène vers le haut autour de la paroi périphérique de ladite chambre de combustion (230).

16. Procédé selon l'une quelconque des revendications 13 à 15, caractérisé en ce que l'un desdits gaz turbulents est introduit dans ladite chambre de combustion (230), radialement vers l'intérieur d'un autre desdits gaz turbulents, et en un point suffisamment bas en dessous de la fermeture supérieure de la chambre de combustion (230) pour empêcher les résidus de combustion solides de s'accumuler sur cette fermeture.

17. Procédé selon l'une quelconque des revendications 13 à 16, caractérisé par une étape de refroidissement des gaz d'échappement par mélange avec de l'air de refroidissement.

18. Procédé selon l'une quelconque des revendications 13 à 17, caractérisé par une étape consistant à éviter un retour de flamme dans un conduit d'alimentation en gaz de photogravure dans la chambre de combustion (230), par réduction de la section transversale du conduit et par l'introduction en suffisance de gaz ininflammable dans ledit conduit en amont de ladite chambre (230) de telle manière que la vitesse d'écoulement du gaz dans ledit conduit est supérieure à la vitesse de propagation de la flamme dans le mélange de gaz résultant.

19. Procédé selon l'une quelconque des revendications 13 à 18, caractérisé par une étape de raclage mécanique des produits de combustion solides accumulés sur la paroi (240) de ladite chambre de combustion (230).
